# EUROPÄISCHE PATENTSCHRIFT

(11) **EP 0 890 551 B1**
(45) Veröffentlichungstag und Bekanntmachung des Hinweises auf die Patenterteilung: **02.10.2002**
(21) Anmeldenummer: 98112756.6
(22) Anmeldetag: 09.07.1998
(51) Int. Cl.: C02F 1/08, C13G 1/00, B01D 1/22, B01D 1/30

(54) **Dampfbeheizte Vorrichtung zur Verdampfung oder Eindickung von Flüssigkeiten**
Steam heated apparatus to evaporate or concentrate liquids
Dispositif, chauffé par la vapeur, pour l'évaporation ou la concentration de liquides

(30) Priorität: 10.07.1997 DE 19729514
(43) Veröffentlichungstag der Anmeldung: 13.01.1999
(73) Patentinhaber: Balcke-Dürr Service GmbH, 40882 Ratingen (DE)
(72) Erfinder: Morgenroth, Boris, D-13156 Berlin (DE); Svoboda, Jiri, D-40882 Ratingen (DE); Niepoth, Klaus, D-47495 Rheinberg (DE)
(74) Vertreter: Stenger, Watzke & Ring Patentanwälte

(56) Entgegenhaltungen:
- DE-U- 29 520 263
- FR-A- 1 550 297
- FR-A- 2 175 757

## Beschreibung

Die Erfindung betrifft eine dampfbeheizte Vorrichtung zur Verdampfung oder Eindickung von Flüssigkeiten, beispielsweise Meerwasser oder Zuckerrübensaft, mit mindestens einem Wärmetauscher, dem die Flüssigkeit von oben durch einen Flüssigkeitsverteiler und unterhalb des Flüssigkeitsverteilers angeordnete, mit einer Vielzahl von Löchern versehene Verteilbleche derart aufgegeben wird, daß die Flüssigkeit als Fallfilm auf der Innenfläche von senkrecht verlaufenden Kanälen innerhalb des Wärmetauschers nach unten fließt und hierbei im Kreuz- und/oder Gegenstrom mit Dampf beheizt wird, wobei die Verteilbleche von einer ringförmigen Wand umgeben sind.

Eine Vorrichtung der voranstehend genannten Art ist beispielsweise aus der DE-OS 1 519 637 bekannt. Diese bekannte Vorrichtung hat den Nachteil, daß sie bei einem Betrieb mit Flüssigkeiten mit großem Schmutzgehalt leicht verstopft, da sich die in den Verteilblechen ausgebildeten Löchern durch die sedimentierenden Schmutzpartikel zusetzen. Insbesondere ist es bei der aus der DE-OS 1 519 637 bekannten Vorrichtung nachteilig, daß die in verschiedenen Ebenen übereinander angeordneten Verteilbleche von einer gemeinsamen Wand umgeben sind, in der sich die Schmutzpartikel ansammeln. Dieses Aufstauen der Schmutzpartikel führt zwangsläufig zum Verstopfen der Verteilbleche oder zum Durchtritt von Schmutzpartikeln zu den Plattenwärmetauschem, die infolge der Beaufschlagung mit mit Schmutzpartikeln beladener Flüssigkeit verkrusten.

Der Erfindung liegt die **Aufgabe** zugrunde, eine dampfbeheizte Vorrichtung der eingangs beschriebenen Art zu schaffen, die auch mit Flüssigkeiten mit großem Schmutzgehalt sicher betrieben werden kann.

Die **Lösung** dieser Aufgabenstellung durch die Erfindung ist dadurch gekennzeichnet, daß der Wärmetauscher als Plattenwärmetauscher ausgeführt ist und daß zwischen dem Flüssigkeitsverteiler und den Verteilblechen ein zusätzliches Lochblech mit die Oberseite der Löcher umgebenden Überlaufröhrchen und entlang der Umfangsflächen des zusätzlichen Lochbleches Sammelsegmente mit mindestens einem Ablauf angeordnet sind, durch den die mit Schmutzpartikeln beladene, durch das zusätzliche Lochblech auf die Sammelsegmente gelangende Flüssigkeit direkt durch den den Plattenwärmetauscher umgebenden Brüdenraum oder indirekt über eine Außenleitung in den Sumpf der Vorrichtung gelangt.

Durch die Ausbildung der Überlaufröhrchen auf der Oberseite des zusätzlichen Lochbleches wird die aus dem Flüssigkeitsverteiler kommende Flüssigkeit auf diesem Lochblech aufgestaut, so daß sich in Abhängigkeit von der Flüssigkeitsbeaufschlagung ein Flüssigkeitsniveau einstellt, das in jedem Falle über den Oberkanten der Überlaufröhrchen liegt. Durch diese Überlaufröhrchen läuft die Flüssigkeit auf die nachgeschalteten Verteilbleche, auf denen sich kein Flüssigkeitsniveau einstellt und die für die Feinverteilung des Flüssigkeitsfilms auf dem Weg hin zum ersten Plattenwärmetauscher sorgen. Aufgrund des auf dem zusätzlichen Lochblech aufgestauten Flüssigkeitsniveaus können sich mit der Flüssigkeit mitgeführte Schmutzpartikel durch Sedimentation auf der Oberfläche des zusätzlichen Lochbleches, das heißt zwischen den Überlaufröhrchen absetzen. Diese Sedimentation der Schmutzpartikel kann aber aufgrund der Ausbildung der die Löcher umgebenden Überlaufröhrchen nicht zu einem Verstopfen dieses zusätzlichen Lochbleches durch die Schmutzpartikel führen. Die von dem Flüssigkeitsverteiler auf das zusätzliche Lochblech strömende Flüssigkeit sorgt darüber hinaus für eine Strömung auf dem zusätzlichen Lochblech, durch welche die sedimentierten Schmutzpartikel zu dem entlang der Umfangsfläche des zusätzlichen Lochbleches angeordneten mindestens einen Sammelsegment transportiert werden. Jedes Sammelsegment ist mit mindestens einem Ablauf für die mit Schmutzpartikeln beladene Flüssigkeit ausgebildet, so daß es in diesem Bereich ebenfalls zu keinem Rückstau oder keinem Ansammeln von Schmutzpartikeln kommen kann.

Aus der DE-AS 22 12 816 war es zwar bei einer Vorrichtung zur Flüssigkeitsverteilung in einem Fallstromverdampfer bekannt, den Lochboden einer unterhalb des Flüssigkeitsverteilers angeordneten Wanne für die Aufgabe der Flüssigkeit auf die senkrecht verlaufenden Kanäle des Wärmetauschers mit die Löcher umgebenden Überlaufröhrchen zu versehen; diese Überlaufröhrchen dienten jedoch lediglich der Einstellung eines Flüssigkeitsniveaus in der allseits mit einem senkrecht aufragenden Rand versehenen Wanne. Ein Ansammeln und seitliches Ableiten von in der Flüssigkeit enthaltenen Schmutzpartikeln ist weder vorgesehen noch wegen des Wannenrandes möglich.

Um das Austragen der auf der Oberfläche des zusätzlichen Lochbleches angesammelten sedimentierten Schmutzpartikel zu beschleunigen, wird gemäß einer bevorzugten Ausführungsform der Erfindung vorgeschlagen, daß das zusätzliche Lochblech nach außen geneigt ausgebildet ist. Durch diese bis zu 15° betragende Neigung des Lochbleches fließen die sedimentierten Schmutzpartikel selbsttätig in Richtung der entlang der Umfangsfläche des zusätzlichen Lochbleches angeordneten Sammelsegmente ab.

Damit es durch sedimentierende Schmutzpartikel nicht zu einem Verstopfen der Oberkanten der Überlaufröhrchen kommen kann, wird mit der Erfindung weiterhin vorgeschlagen, daß an der freien Oberkante der Überlaufröhrchen mindestens ein sich in Längsrichtung der Überlaufröhrchen erstreckender Schlitz ausgebildet ist. Selbst bei einem Zusetzen der Oberfläche eines Überlaufröhrchens durch sedimentierende Schmutzpartikel ist es bei einem solchermaßen ausgebildeten Überlaufröhrchen dennoch möglich, daß die auf dem zusätzlichen Lochblech aufgestaute Flüssigkeit durch den in dem Überlaufröhrchen ausgebildeten Schlitz auf die nachgeschalteten Verteilbleche gelangen kann.

Die in den Sammelsegmenten aufgefangene mit Schmutzpartikeln beladene Flüssigkeit wird gemäß einer bevorzugten Ausführungsform der Erfindung über den mindestens einen Ablauf eines jeden Sammelsegments direkt durch den Brüdenraum oder indirekt über eine Außenleitung in den Sumpf des Verdampferkörpers geleitet.

Schließlich wird mit der Erfindung vorgeschlagen, daß der Raum oberhalb des Flüssigkeitsverteilers durch einen Deckel abgedeckt ist, wobei der Deckel umfangsseitig einen Durchlaß für die Entspannungsbrüden aufweist, der labyrinthartig so ausgebildet ist, daß im Bereich des Durchlasses eine Tropfenabscheidung erfolgt. Durch diese Ausgestaltung kann weitgehend auf eine nachträgliche Tropfenabscheidung bei der Brüdenaufbereitung verzichtet werden.

Weitere Merkmale und Vorteile der Erfindung ergeben sich aus der nachfolgenden Beschreibung der zugehörigen Zeichnung, in der drei Ausführungsbeispiele der erfindungsgemäßen Vorrichtung dargestellt sind. In der Zeichnung zeigt:
- Fig. 1: einen schematischen Längsschnitt durch eine erste Ausführungsform einer erfindungsgemäßen Vorrichtung;
- Fig. 2: eine schematische Draufsicht auf die in Fig. 1 dargestellte Vorrichtung, jedoch ohne Deckel;
- Fig. 3: einen schematischen Längsschnitt durch eine zweite Ausführungsform einer erfindungsgemäßen Vorrichtung;
- Fig. 4: einen schematischen Längsschnitt durch eine dritte Ausführungsform einer erfindungsgemäßen Vorrichtung und
- Fig. 5: eine vergrößerte Ansicht des in Fig. 1 mit V gekennzeichneten Bereichs.

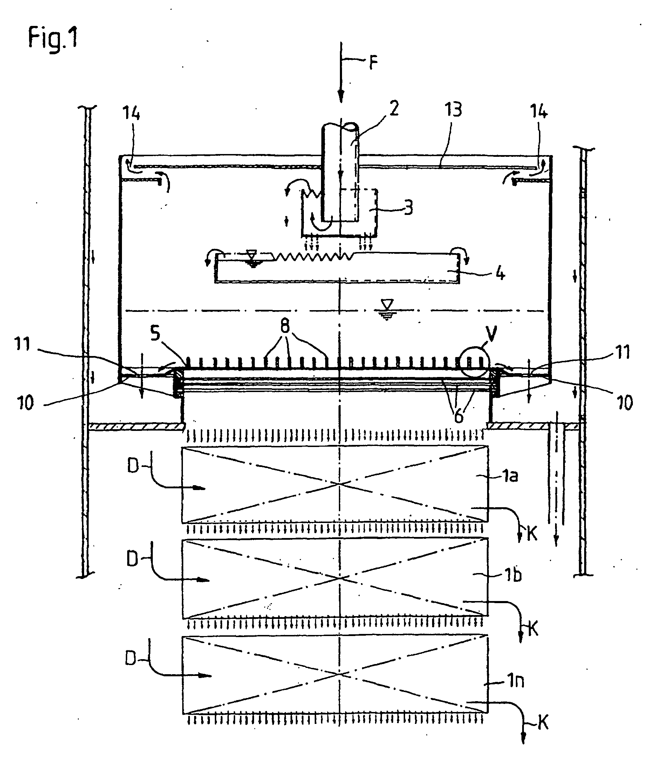

Wie aus der schematischen Darstellung gemäß Fig. 1 hervorgeht, umfaßt die Vorrichtung zur Verdampfung oder Eindickung von Flüssigkeiten F mehrere Plattenwärmetauscher 1a, 1b, 1n, denen die Flüssigkeit F jeweils von oben her aufgegeben wird, wobei die Flüssigkeit F in bekannter Weise etwa senkrecht verlaufende Kanäle der Plattenwärmetauscher 1a, 1b und 1n durchläuft. Da derartige Plattenwärmetauscher 1a, 1b, 1n bekannt sind, wurden sie in Fig. 1 nur schematisch angedeutet. Die Darstellung zeigt ebenfalls, daß die Plattenwärmetauscher 1a, 1b, 1n (beim Ausführungsbeispiel im Kreuzstrom) mit Dampf D beheizt werden, um eine Verdampfung oder Eindickung der Flüssigkeit F zu erzielen. Auch das aus den Plattenwärmetauschern 1a, 1b, 1n ablaufende Kondensat K ist schematisch in Fig. 1 angedeutet.

Die Verteilung der über ein Tauchrohr 2 und einen Überlaufbehälter 3 zugeführten Flüssigkeit F auf die gesamte Oberfläche des oben liegenden Plattenwärmetauschers 1a erfolgt mit Hilfe einer Vorverteilung, die beim Ausführungsbeispiel aus einem schalenförmigen Flüssigkeitsverteiler 4 besteht. In diesem Flüssigkeitsverteiler 4 wird ein konstantes Flüssigkeitsniveau gehalten, wie dies in Fig. 1 angedeutet ist. Der Flüssigkeitsverteiler hat beim Ausführungsbeispiel einen gezahnten Rand, durch den die überlaufende Flüssigkeit auf ein Lochblech 5 gelangt. Unterhalb dieses Lochbleches 5 befinden sich beim dargestellten Ausführungsbeispiel drei im Abstand zueinander sowie parallel verlaufende, mit Löchern versehene Verteilbleche 6.

Die Darstellung in Fig. 1 sowie insbesondere die vergrößerte Detailansicht gemäß Fig. 5 zeigt, daß auf der Oberseite des Lochbleches 5 die Löcher 7 umgebende Überlaufröhrchen 8 ausgebildet sind. Durch diese Ausbildung der Überlaufröhrchen 8 stellt sich auf dem Lochblech 5 ein von der Flüssigkeitsbeaufschlagung abhängiges Flüssigkeitsniveau ein, das in jedem Falle oberhalb der Oberkante der Überlaufröhrchen 8 verläuft, wie dies in Fig. 1 dargestellt ist. Um zu verhindern, daß sich die Durchgangsbohrung eines Überlaufröhrchens 8 durch Schmutzpartikel zusetzt, die sich auf der Oberkante des Überlaufröhrchens 8 absetzen, ist bei dem in Fig. 5 vergrößert dargestellten Überlaufröhrchen an der freien Oberkante ein sich in Längsrichtung des Überlaufröhrchens 8 erstreckender, V-förmiger Schlitz 9 ausgebildet. Durch diesen Schlitz 9 kann selbst dann noch Flüssigkeit F vom Lochblech 5 auf die nachgeschalteten Verteilbleche 6 gelangen, wenn die Oberkante des Überlaufröhrchens 8 durch sedimentierte Schmutzpartikel abgedeckt ist.

Wie weiterhin aus Fig. 1 ersichtlich, sind entlang der Umfangsfläche des Lochbleches 5 vier Sammelsegmente 10 für mit Schmutzpartikeln beladene Flüssigkeit angeordnet. Jedes der Sammelsegmente 10 weist einen Ablauf 11 auf, über den die mit den Schmutzpartikeln beladene Flüssigkeit in den Sumpf des Verdampfungskörpers gelangt. Beim in Fig. 1 dargestellten Ausführungsbeispiel erfolgt das Ableiten der mit den Schmutzpartikeln beladenen Flüssigkeit über die Abläufe 11 in direkter Weise in den Sumpf des Verdampferkörpers, das heißt durch den Brüdenraum entlang der Plattenwärmetauscher 1a bis 1n.

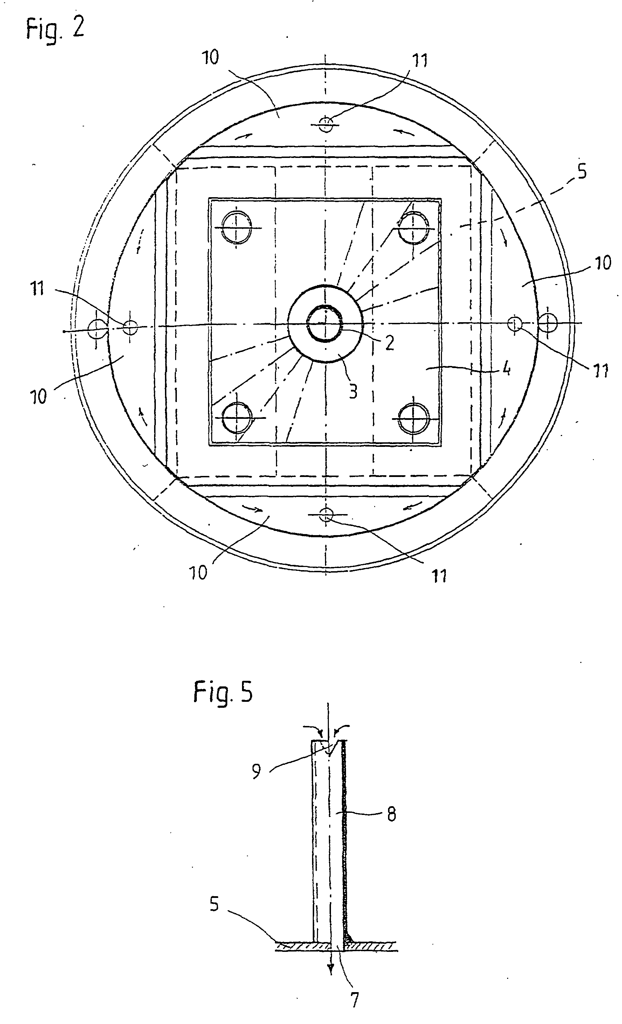

Die Anordnung der mit den Abläufen 11 versehenen Sammelsegmente 10 ist insbesondere der in Fig. 2 dargestellten schematischen Draufsicht zu entnehmen.

Durch das aufgrund der Anordnung der Überlaufröhrchen 8 hervorgerufene Aufstauen der Flüssigkeit F auf dem Lochblech wird erreicht, daß sich mit der Flüssigkeit F mitgeführte Schmutzpartikel auf dem Lochblech 5, das heißt zwischen den Überlaufröhrchen 8 absetzen können, bevor die Flüssigkeit F den dem Lochblech 5 nachgeschalteten Verteilblechen 6 zugeführt wird. Bei dem in Fig. 1 dargestellten ersten Ausführungsbeispiel ist das Lochblech 5 eben, das heißt parallel zu den Verteilblechen 6 ausgebildet. Bei dieser Ausführungsform können die zwischen den Überlaufröhrchen 8 auf der Oberfläche des Lochbleches 5 sedimentierten Schmutzpartikel durch die Strömung hin zu den Sammelsegmenten 10 abgeleitet werden, die durch die aus den Flüssigkeitsverteiler 4 herabströmende Flüssigkeit F hervorgerufen wird.

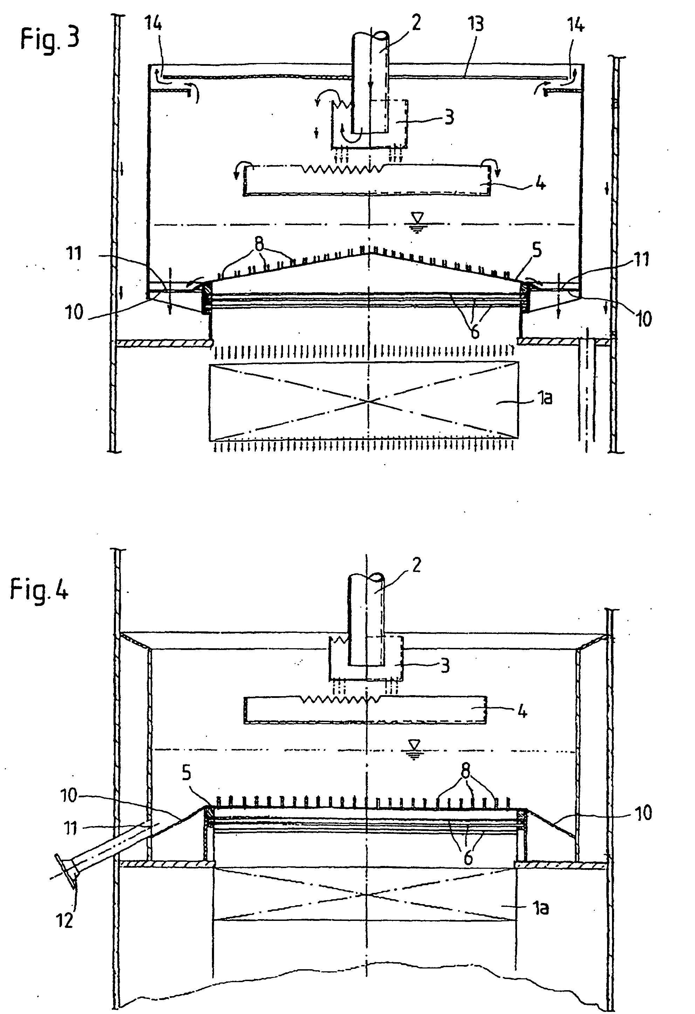

Bei dem in Abbildung Fig. 3 dargestellten zweiten Ausführungsbeispiel ist das Lochblech 5 nach außen geneigt ausgebildet. Durch die Ausbildung einer Neigung des Lochbleches 5 von der Mitte zum Rand hin mit einer Steigung von bis zu 15° wird ein kontinuierliches Abfließen der sedimentierten Schmutzpartikel hin zu den Sammelsegmenten 10 erreicht. Ansonsten stimmt die in Fig. 3 dargestellte zweite Ausführungsform der Vorrichtung zur Verdampfung oder Eindickung von Flüssigkeiten F mit der in Fig. 1 dargestellten und voranstehend beschriebenen Vorrichtung überein.

Die in Fig. 4 dargestellte Ausführungsform unterscheidet sich von der Ausführungsform gemäß Fig. 1 dadurch, daß die Abläufe 11 der Sammelsegmente 10 mit Außenleitungen 12 verbunden sind, über welche die mit den Schmutzpartikeln beladene Flüssigkeit ausgehend von den Sammelsegmenten 10 indirekt, das heißt nicht durch den Brüdenraum, in den Sumpf des Verdampferkörpers abgeleitet wird.

Bei den in Fig. 1 und 3 dargestellten Ausführungsbeispielen ist der Raum oberhalb des Flüssigkeitsverteilers 4 durch einen Deckel 13 abgedeckt. Umfangsseitig weist der Deckel 13 einen Durchlaß 14 zum Austritt der Entspannungsbrüden auf. Um zu verhindern, daß bei einem offenen Durchlaß 14 Flüssigkeitstropfen mit den austretenden Entspannungsbrüden mitgerissen werden können, ist der Durchlaß 14 labyrinthartig so ausgebildet, daß die Entspannungsbrüden mehrfach umgelenkt werden, wenn sie durch den Durchlaß 14 hindurchtreten. Durch diese labyrinthartige Ausbildung des Durchlasses 14 werden mit den Entspannungsbrüden mitgerissene Flüssigkeitstropfen abgeschieden.

Durch die Anordnung des mit den Überlaufröhrchen 8 versehenen zusätzlichen Lochbleches 5 zwischen dem Flüssigkeitsverteiler 4 und den Verteilblechen 6 ist es möglich, eine solchermaßen ausgestaltete Vorrichtung zur Verdampfung oder Eindickung von Flüssigkeiten F auch mit Flüssigkeiten F großen Schmutzgehalts sicher zu betreiben, das heißt ohne die Gefahr von Verstopfungen der in den Verteilblechen 6 ausgebildeten Bohrungen oder der Verkrustung der Plattenwärmetauscher 1 bis 1n.

### Bezugszeichenliste

- 1a: Plattenwärmetauscher
- 1b: Plattenwärmetauscher
- 1n: Plattenwärmetauscher
- 2: Tauchrohr
- 3: Überlaufbehälter
- 4: Flüssigkeitsverteiler
- 5: Lochblech
- 6: Verteilblech
- 7: Loch
- 8: Überlaufröhrchen
- 9: Schlitz
- 10: Sammelsegment
- 11: Ablauf
- 12: Außenleitung
- 13: Deckel
- 14: Durchlaß

- F: Flüssigkeit
- D: Dampf
- K: Kondensat

## Patentansprüche

1. Dampfbeheizte Vorrichtung zur Verdampfung oder Eindickung von Flüssigkeiten, beispielsweise Meerwasser oder Zuckerrübensaft, mit mindestens einem Wärmetauscher, dem die Flüssigkeit von oben durch einen Flüssigkeitsverteiler (4) und unterhalb des Flüssigkeitsverteilers (4) angeordnete, mit einer Vielzahl von Löchern versehene Verteilbleche (6) derart aufgegeben ,wird, daß die Flüssigkeit (F) als Fallfilm auf der Innenfläche von senkrecht verlaufenden Kanälen innerhalb des Wärmetauschers nach unten fließt und hierbei im Kreuz- und/oder Gegenstrom mit Dampf (D) beheizt wird, wobei die Verteilbleche (6) von einer ringförmigen Wand umgeben sind,
**dadurch gekennzeichnet,**
**daß** der Wärmetauscher als Plattenwärmetauscher (1a, 1b, 1n) ausgeführt ist und daß zwischen dem Flüssigkeitsverteiler (4) und den Verteilblechen (6) ein zusätzliches Lochblech (5) mit die Oberseite der Löcher (7) umgebenden Überlaufröhrchen (8) und entlang der Umfangsflächen des zusätzlichen Lochbleches (5) Sammelsegmente (10) mit mindestens einem Ablauf (11) angeordnet sind, durch den die mit Schmutzpartikeln beladene, durch das zusätzliche Lochblech (5) auf die Sammelsegmente (10) gelangende Flüssigkeit direkt durch den den Plattenwärmetauscher (1a, 1b, 1n) umgebenden Brüdenraum oder indirekt über eine Außenleitung (12) in den Sumpf der Vorrichtung gelangt.

2. Vorrichtung nach Anspruch 1, **dadurch gekennzeichnet, daß** das zusätzliche Lochblech (5) nach außen geneigt ausgebildet ist.

3. Vorrichtung nach Anspruch 2, **dadurch gekennzeichnet, daß** die Neigung des zusätzlichen Lochbleches (5) bis zu 15° beträgt.

4. Vorrichtung nach mindestens einem der Ansprüche 1 bis 3, **dadurch gekennzeichnet, daß** an der freien Oberkante der Überlaufröhrchen (8) mindestens ein sich in Längsrichtung der Überlaufröhrchen (8) erstreckender Schlitz (9) ausgebildet ist.

5. Vorrichtung nach Anspruch 1, **dadurch gekennzeichnet, daß** der Raum oberhalb des Flüssigkeitsverteilers (4) durch einen Deckel (13) abgedeckt ist, wobei der Deckel (13) umfangsseitig einen Durchlaß (14) für die Entspannungsbrüden aufweist, der labyrinthartig so ausgebildet ist, daß im Bereich des Durchlasses (14) eine Tropfenabscheidung erfolgt.

## Claims

1. Steam-heated appliance for the evaporation or thickening of liquids, for example sea water or sugarbeet juice, with at least one heat exchanger, to which the liquid is delivered from above by a liquid distributor (4) and distribution plates (6) arranged below the liquid distributor (4) and provided with a multiplicity of holes, in such a way that the liquid (F) flows downwards as a falling film on the inner face of vertically running ducts within the heat exchanger and at the same time is heated with steam (D) in cross current and/or countercurrent, the distribution plates (6) being surrounded by an annular wall, **characterized in that** the heat exchanger is designed as a plate heat exchanger (1a, 1b, 1n), and **in that** between the liquid distributor (4) and the distribution plates (6) are arranged an additional perforated plate (5) with overflow tubelets (8) surrounding the top side of the holes (7) and, along the circumferential surfaces of the additional perforated plate (5), collecting. segments (10) with at least one outflow (11), and of which the liquid laden with dirt particles and passing through the additional perforated plate (5) onto the collecting segments (10) passes directly through the vapour space surrounding the plate heat exchanger (1a, 1b, 1n) or indirectly, via an outer line (12), into the sump of the appliance.

2. Appliance according to Claim 1, **characterized in that** the additional perforated plate (5) is designed so as to be inclined outwards.

3. Appliance according to Claim 2, **characterized in that** the inclination of the additional perforated plate (5) is up to 15°.

4. Appliance according to at least one of Claims 1 to 3, **characterized in that** at least one slit (9) extending in the longitudinal direction of the overflow tubelets (8) is formed at the free top edge of the overflow tubelets (8).

5. Appliance according to Claim 1, **characterized in that** the space above the liquid distributor (4) is covered by a lid (13), the lid (13) having circumferentially a passage (15) for the expansion vapours which is of labyrinth-like design such that drop separation takes place in the region of the passage (14).

## Revendications

1. Dispositif chauffé à la vapeur destiné à l'évaporation ou à l'épaississement de liquides, par exemple d'eau de mer ou de jus de betteraves sucrières, comportant au moins un échangeur de chaleur auquel le liquide est amené par le haut par un répartiteur (4) de liquide et par des tôles de répartition (6) munies dune multitude de perforations disposées sous le répartiteur (4) de liquide, de telle sorte qu'à l'intérieur de l'échangeur de chaleur le liquide (F) s'écoule vers le bas en tant que film tombant sur la face intérieure de canaux s'étendant verticalement, et soit en l'occurrence chauffé à courant croisé et/ou à contre-courant par de la vapeur (D), les tôles de répartition (6) étant entourées d'une paroi annulaire,
**caractérisé en ce que**
l'échangeur de chaleur est réalisé sous la forme d'un échangeur de chaleur à plaques (1a, 1b, 1n), **en ce qu'**une tôle perforée supplémentaire (5) avec des tubes de trop-plein (8) entourant la face supérieure des perforations (7) est disposée entre le répartiteur (4) de liquide et les tôles de répartition (6), et **en ce que** des segments collecteurs (10) sont disposés le long des surfaces périphériques de la tôle perforée supplémentaire (5), lesquels comportent au moins un écoulement (11) par l'intermédiaire duquel le liquide chargé en particules d'impuretés arrivant à travers la tôle perforée supplémentaire (5) sur les segments collecteurs (10) parvient directement dans le bassin de décantation du dispositif à travers la chambre de buées entourant l'échangeur de chaleur à plaques (1a, 1b, 1n), ou indirectement par l'intermédiaire d'une conduite extérieure (12).

2. Dispositif selon la revendication 1, **caractérisé en ce que** la tôle perforée supplémentaire (5) est agencée en étant inclinée vers l'extérieur.

3. Dispositif selon la revendication 2, **caractérisé en ce que** l'inclinaison de la tôle perforée supplémentaire (5) peut aller jusqu'à 15°.

4. Dispositif selon l'une au moins des revendications 1 à 3, **caractérisé en ce qu'**au moins une fente (9) s'étendant dans la direction longitudinale des tubes de trop-plein (8) est pratiquée au niveau du bord supérieur libre des tubes de trop-plein (8).

5. Dispositif selon la revendication 1, **caractérisé en ce que** l'espace situé au-dessus du répartiteur (4) de liquide est recouvert d'un couvercle (13), le couvercle (13) comportant en périphérie un passage (14) de type labyrinthe pour les buées de détente, de sorte qu'une séparation de gouttelettes soit effectuée dans la zone du passage (14).
